# EUROPEAN PATENT SPECIFICATION

(11) **EP 2 194 692 B1**
(45) Date of publication and mention of the grant of the patent: **06.07.2016**
(21) Application number: 09252689.6
(22) Date of filing: 27.11.2009
(51) Int. Cl.: H04L 29/08, H04N 21/235, H04N 21/436, H04N 21/4788, H04N 21/858, H04L 12/28

(54) **Techniques to push content to a connected device**
Techniken zum Verschieben von Inhalt auf ein angeschlossenes Gerät
Techniques pour envoyer un contenu dans un dispositif connecté

(30) Priority: 03.12.2008 US 327111
(43) Date of publication of application: 09.06.2010
(73) Proprietor: Intel Corporation, Santa Clara, CA 95054 (US)
(72) Inventor: Barnes, Shannon B., Gilbert, AZ 85296 (US)
(74) Representative: Maiwald Patentanwalts GmbH

(56) References cited:
- "Web-based Protocol and Framework for Remote User Interface on UPnP(TM) Networks and the Internet (Web4CE); CEA-2014" EIA/TIA STANDARDS, TELECOMMUNICATIONS INDUSTRY ASSOCIATIONS, ARLINGTON, VA, US, 1 June 2006 (2006-06-01), XP017005667
- DEES W ET AL: "WEB4CE: ACCESSING WEB-BASED APPLICATIONS ON CONSUMER DEVICES" INTERNET CITATION 30 April 2007 (2007-04-30), XP002431655 Retrieved from the Internet: URL:http://www.cs.bell-labs.com/cm/cs/who/ pfps/temp/web/www2007.org/poste rs/poster1017.pdf> [retrieved on 2007-04-30]

## Description

### BACKGROUND

Today's homes may have one or more means for receiving and displaying content via a single display device. For example, various electronic devices in the home may be networked together in such a way to provide a user with a means for entertainment. Each of these electronic devices typically receives, processes and/or stores content. Example electronic devices may include personal computers (PCs), digital televisions (DTVs), digital video disk (DVD) players, video cassette recorder (VCR) players, compact disk (CD) players, set-top boxes (STBs), stereo receivers, audio/video receivers (AVRs), media centers, personal video recorders (PVRs), digital video recorders (DVRs), gaming devices, digital camcorders, digital cameras, blackberries™, cellular phones, personal digital assistants (PDAs), and so forth. A network connected device may also be adapted to receive content from multiple inputs representing Internet Protocol (IP) input connections, person-to-person (P2P) input connections, cable/satellite/broadcast input connections, DVB-H and DMB-T transceiver connections, ATSC and cable television tuners, UMTS and WiMAX MBMS/MBS, IPTV through DSL or Ethernet connections, WiMax and Wifi connections, Ethernet connections, and so forth.

While many of today's homes may have one or more means for receiving and displaying content via a single display as described above, there still exist user experience limitations for many of these devices. For example, while surfing the Internet or web on a connected digital television (directly or via a set-top box) is certainly feasible, the user experience can be awkward in many instances, such as navigating a complicated website, keyboard input, and reading large amounts of text. In general, a PC works better than a connected digital television for a user to surf and view the Internet or web. However, the connected digital television can surpass the PC web experience in certain cases such as playing high-resolution video, surround sound audio, displaying content in a social setting, and so forth.

Currently, ways to display content on a connected digital television that was first viewed by a PC, for example, are cumbersome. For example, a user may retype the URL of a web page into the browser of the connected digital television or make a favorite shortcut of the web page and manually copy the shortcut to the connected digital television. The user may also save the favorite shortcut of the web page on a web service and log onto that web service on the digital television or use a video cable and connect the PC to the digital television.

Disclosed in "Web-based Protocol and Framework for Remote User Interface on UPnP(TM) Networks and the Internet (Web4CE); CEA-2014" EIA/TIA STANDARDS, TELECOMMUNICATIONS INDUSTRY ASSOCIATIONS, ARLINGTON, VA, US, 1 June 2006 is a remote user interface framework for interoperability on UPnP networks and the internet.

Disclosed in DEES W ET AL: "WEB4CE: ACCESSING WEB-BASED APPLICATIONS ON CONSUMER DEVICES" 30 April 2007, Retrieved from the Internet: URL: httρ://www.cs.bell-labs.com/cm/cs/who/pfps/temp/web/www2007.org/posters/poster1017.pdf is a remote user interface framework for interoperability on UPnP networks and the internet.

According to a first aspect of the present invention a method is provided as defined in claim 1.

According to a second aspect of the present invention a method is provided as defined in claim 3.

According to a third aspect of the present invention a system is provided as defined in claim 9.

According to a fourth aspect of the present invention a machine readable storage medium is provided as defined in claim 8.

According to a fourth aspect of the present invention a device is provided as defined in claim 14.

### BRIEF DESCRIPTION OF THE DRAWINGS

Figure 1 illustrates one embodiment of a system.
Figure 2 illustrates one embodiment of a user interface.
Figure 3 illustrates one embodiment of a logic flow.
Figure 4 illustrates one embodiment of a logic flow.
Figure 5 illustrates one embodiment of a system.
Figure 6 illustrates one embodiment of a device.

### DETAILED DESCRIPTION

Various embodiments of the invention may be generally directed to techniques to push content to a connected device. Embodiments allow a user to more easily move content (or URL pointers to Web based content) between connected devices in a network to enhance the user experience. Embodiments of the invention provide for a user to use one device to search for content and then to more easily push that content to another device for viewing or consumption.

An example not meant to limit the invention involves a PC and a connected digital television (either used directly or via a set-top box). For example, as discussed above, while surfing the Internet or web on a connected digital television is certainly feasible, the user experience can be awkward in many instances, such as navigating a complicated website, keyboard input, and reading large amounts of text. In general, a PC works better than a connected digital television for a user to surf and view the Internet or web. However, the connected digital television can surpass the PC web experience in certain cases such as playing high-resolution video, playing audio via surround sound, displaying content in a social setting, and so forth.

In embodiments, content that was first viewed on the PC may be pushed to the digital television via an Universal Plug and Play (UPnP) action. The action maybe used to avoid having to re-input everything into a browser of the digital television, for example. One embodiment of the action takes two parameters, a parameter that defines what the PC is viewing or has viewed (e.g., URL of a web page) and a parameter that defines what the digital television should display or make available to a user (e.g., HTML in the web page). The PC provides the defined action to the digital television. The digital television uses the provided action to download the content and prepare to display the content overplayed on the main content that is currently being displayed by the television. It is important to note that although embodiments of the invention may be described herein in terms of a PC and digital television or set-top box, the invention is not limited to this. In fact, embodiments of the invention apply to any device that is adapted to perform the functions described herein. Other embodiments may be described and claimed.

In embodiments, a connected device (digital television or set-top box, for example) is adapted to allow the user to customize the display of the main and pushed content. For example, in embodiments, the main content may be displayed in a main content section of the display screen, where the main content section includes the entire screen. The pushed content may be displayed in a pushed content section, where the pushed content section is overlayed in some way over the main content section on the screen. Embodiments of the invention allow the user to customize the display of the main and pushed content sections (e.g., placement on screen, size, volume level of audio associated with content, quality (e.g., opaque or transparent), audio only, visual only, and so forth). Embodiments of the invention are not limited in this context. Other embodiments may be described and claimed.

Embodiments of the invention also allow for the user to establish or customize display triggers upon defined events. For example, when the main content section starts to display a commercial then enlarge the pushed content section on the screen and increase the volume level for its associated audio (and decrease the volume for the main content). Embodiments of the invention are not limited in this context.

Various embodiments may comprise one or more elements or components. An element may comprise any structure arranged to perform certain operations. Each element may be implemented as hardware, software, or any combination thereof, as desired for a given set of design parameters or performance constraints. Although an embodiment may be described with a limited number of elements in a certain topology by way of example, the embodiment may include more or less elements in alternate topologies as desired for a given implementation. It is worthy to note that any reference to "one embodiment" "or "an embodiment" means that a particular feature, structure, or characteristic described in connection with the embodiment is included in at least one embodiment. The appearances of the phrase "in one embodiment" in various places in the specification are not necessarily all referring to the same embodiment.

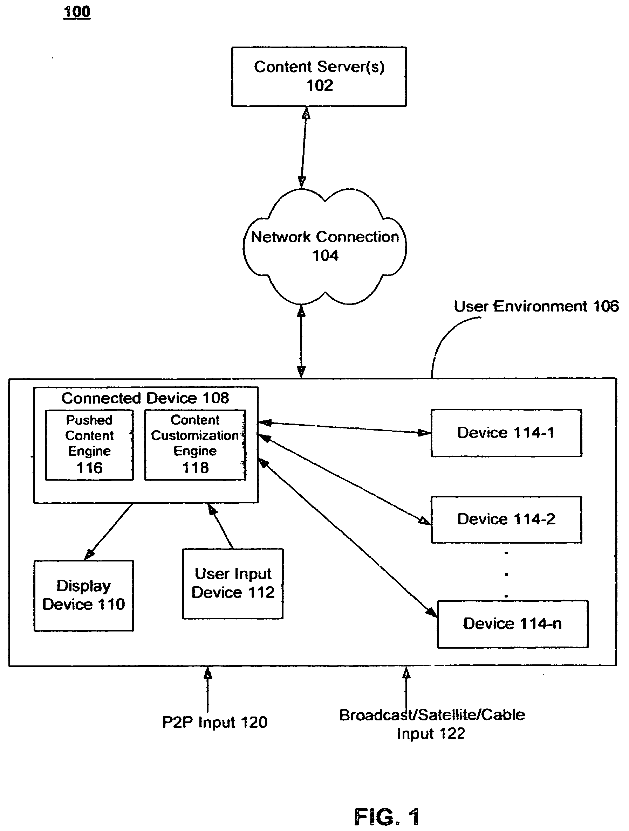

Figure 1 illustrates an embodiment of a system 100. Referring to Figure 1, system 100 may comprise content server(s) 102, a network connection 104 and a user environment 106. User environment 106 may include a connected device 108, a display device 110, a user input device 112 and devices 114 (114-1 through 114-n, where n is any positive integer). Connected device 108 may include a pushed content engine 116 and a content customization engine 118. A P2P input 120 and broadcast/satellite/cable inputs 122 are connected to device 108. Possible inputs or connections may also include DVB-H and DMB-T transceiver connections, ATSC and cable television tuners, UMTS and WiMAX MBMS/MBS, IPTV through DSL or Ethernet connections, WiMax and Wifi connections, Ethernet connections, and so forth. Each of these elements is described next in more detail.

Content servers 102 may include content that is accessible via network connection 104. In embodiments, content servers 102 may include content in the form of web pages. Content servers 102 may communicate with user environment 106 (as well as other user environments not shown in Figure 1) via network connection 104. Network connection 104 may be a high speed Internet connection or any other type of connection suited for the particular application. Other types of connections may be added or substituted as new connections are developed.

In embodiments, user environment 106 may include a connected device 108. Connected device 108 may be owned, borrowed or licensed by its respective user. Connected device 108 is connected to network connection 104 and may communicate with servers 102 via its unique IP address, for example.

In embodiments, connected device 108 is adapted to receive multiple inputs supporting different sources of media or content. The multiple inputs may represent various types of connections including wired, wireless, or a combination of both. More specifically, the multiple inputs may represent Internet Protocol (IP) input connections (e.g., network connection 104), a person-to-person (P2P) input connection 120. broadcast/satellite/cable input connections 122, DVB-H and DMB-T transceiver connections, ATSC and cable television tuners, UMTS and WiMAX MBMS/MBS, IPTV through DSL or Ethernet connections, WiMax and Wifi connections, Ethernet connections, and inputs from various electronic devices 114-1 through 114-n. Example electronic devices may include, but are not limited to, PCs, laptops, televisions, DVD players, VCR players, CD or music players, STBs, stereo receivers, AVRs, media centers, PVRs, DVRs, gaming devices, digital camcorders, digital cameras, blackberries™, cellular phones, PDAs, laptops, flash devices, and so forth.

In embodiments, the content may be any type of content or data. Examples of content may generally include any data or signals representing information meant for a user, such as media information, voice information, video information, audio information, image information, textual information, numerical information, alphanumeric symbols, graphics, and so forth. The embodiments are not limited in this context.

In embodiments, connected device 108 may represent a device that includes personal video recorder (PVR) functionality. PVR functionality records television data in digital format (e.g., MPEG-1 or MPEG-2 formats) and stores the data in a hard drive or on a server, for example. The data may also be stored in a distributed manner such as on one or more connected devices throughout a home or office environment. In embodiments, a PVR could be used as a container for all things recorded, digital or other (e.g., DVRs).

In embodiments, content that was first viewed on one of devices 114 (e.g., a PC) may be pushed to connected device 108 via an action. One embodiment of the action takes two parameters, a parameter that defines what device 114 is viewing (e.g., URL of a web page on content servers 102) and a parameter that defines what connected device 108 should display (e.g., HTML in the web page). In embodiments, content may refer to one or more URL pointers to web based content.

In embodiments, device 114 provides the defined action to connected device 108 via pushed content engine 116. Pushed content engine 116 uses the provided action to download the content and prepares to display the content overlayed on the main content that is currently being displayed via connected device 108 (e.g., display device 110). As noted above, although an embodiment of the invention may include device 114 being a PC and connected device 108 being a digital television or set-top box, the invention is not limited to this. Devices 108 and/or 114 may be any device adapted to perform the functionality of the embodiments described herein.

An example implementation of an embodiment of an action is discussed next. This example implementation is provided for illustration purposes and is not meant to limit the invention. Here, a Display HTML action is defined within a Universal Plug and Play (UPnP) service. The Display HTML action would allow device 114 (e.g., a PC) to push HTML content to connected device 108 (e.g., a connected digital television or set-top box).

In general, the UPnP architecture allows peer-to-peer (P2P) networking of PCs, networked appliances and wireless devices. Typically, an UPnP compatible device from any vendor can dynamically join a network, obtain an IP address, announce its name, convey its capabilities upon request, and learn about the presence and capabilities of other devices.

In embodiments, the UPnP discovery protocol allows a device to advertise its services to control points on the network. In a similar way, when a control point is added to the network, the UPnP discovery protocol allows the control point to search for devices of interest on the network. The fundamental exchange in these cases is a discovery message containing a few, essential specifics about the device or one of its services. For example, the specifics may include its type, identifier, and/or a pointer to more detailed information. The UPnP discovery protocol may be based on the Simple Service Discovery Protocol (SSDP). In embodiments, the SSDP would allow device 114 to discover connected device 108 on the network. After device 114 finds connected device 108, device 114 would automatically download the connected device's description and see what services it offers.

Following is an example network output of an embodiment of the Display HTML action:

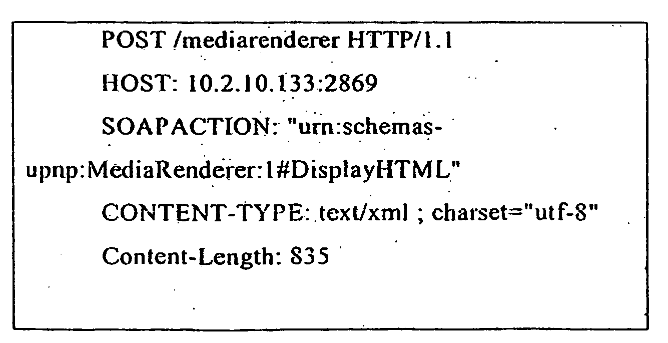

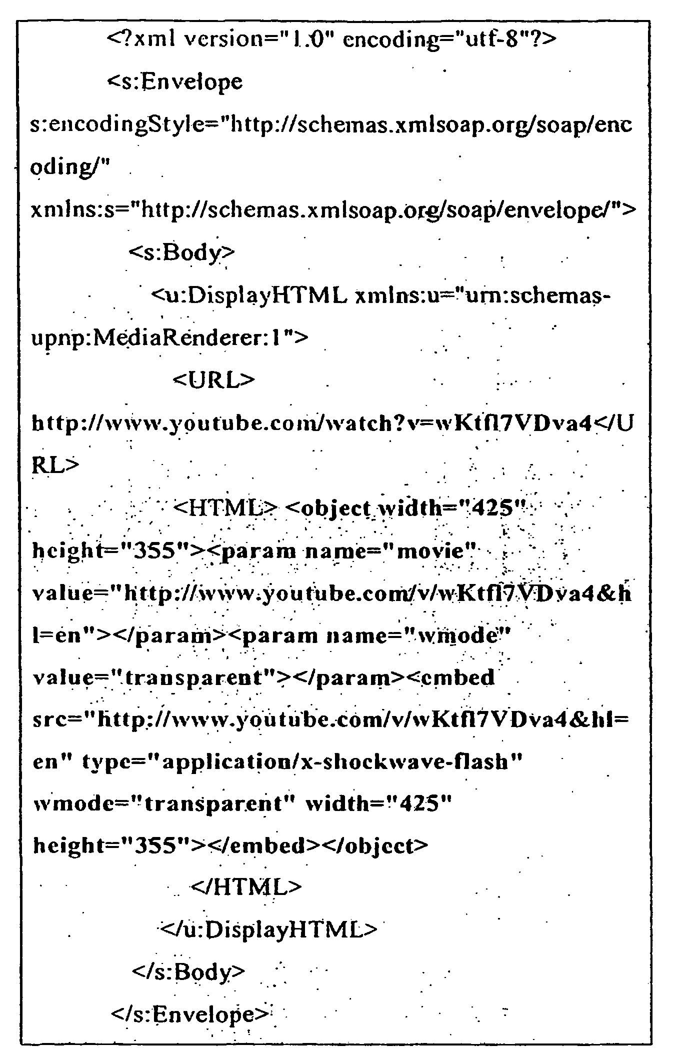

With the Display HTML action, the user of device 114 can push to connected device 108 an entire HTML, of the web page, a subsection of the HTML of the web page or the HTML that contains an embedded application on the web page (such as a Flash player). More specifically, the Display HTML action takes two parameters, a parameter that defines what device 114 is viewing (e.g., URL of a web page) and a parameter that defines what connected device 108 should display (e.g., HTML in the web page). In embodiments, a default rule may be establishes that if the second or HTML parameter is blank, then the whole page from the first or URL parameter is displayed. If the second or HTML parameter has relative links within the HTML, pushed content engine 116 uses the URL parameter to properly resolve the relative links. In the example above, connected device 108 will only display the Flash video player on the YouTube® page given in the URL parameter. In embodiments, connected device 108 and device 114 may include the same architecture (e.g., web plug-ins) and thus they would have the same Flash player, for example, and thus connected device 108 may seamlessly download and play the video content as defined in the Display HTML action.

As discussed above, a user may use the Display HTML action to push to connected device 108 an entire HTML of the web page, a subsection of the HTML of the web page or the HTML that contains an embedded application on the web page (such as a Flash player). One example scenario may involve Tyson who is browsing the web on his PC (e.g., device 114). Tyson comes across a funny video and wants the whole family to see it. Tyson uses the HTML Display action by right clicking the Flash player on his PC and selecting the "Send to TV" option. Shortly, the family's digital television (e.g., connected device 108) has the video on its display screen ready to be played. The whole family gathers on the sofa and gets a good laugh. Another example might involve Hailey who is working on her laptop (e.g., device 114) and wants to see a new movie trailer. Hailey searches the Internet and finds a site showing the trailer. The site has the trailer in 1080P video resolution. Hailey's laptop display screen has much less than 1080P video resolution so she sends the page to her digital television (e.g., connected device 108) using the Display HTML action. Hailey is now able to view the trailer on her digital television in full 1080P video resolution with much better sound through her home entertainment system. These example scenarios are provided for illustration only and are not meant to limit embodiments of the invention.

As mentioned above, and in embodiments, connected device 108 is adapted to allow the user to customize the display of the main and pushed content. This customization may be accomplished via content customization engine 118 (Figure 1). For example, in embodiments, the main content may be displayed in a main content section of the display screen, where the main content section includes the entire screen. The pushed content may be displayed in a pushed content section, where the pushed content section is overlayed in some way over the main content section on the screen. Embodiments of the invention allow the user to customize the display of the main and pushed content sections (e.g., placement on screen, size, volume level of audio associated with content, quality (e.g., opaque or transparent), audio only, visual only, and so forth). embodiments of the invention are not limited in this context.

It is important to note that although pushed content engine 116 and content customization engine 118 are illustrated in Figure 1 as two separate elements or components, embodiments of the invention are not limited in this context. For example, the functionality of engines 116 and 118 may be combined into one component or may be separated into three or more components. Embodiments of the invention are not limited in this context.

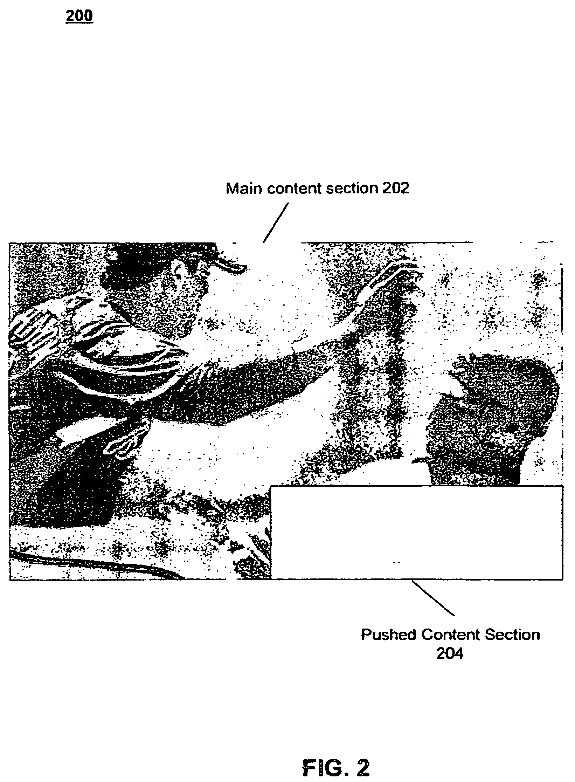

Referring to Figure 2, one embodiment of a user interface 200 is shown. User interface 200 may comprise a main content section 202 and a pushed content section 204. User interface 200 may be displayed on display device 110 (Figure 1), for example. Although pushed content section 204 is illustrated as having one section or window, this is not meant to limit the invention. Each of these sections is described next in more detail.

In embodiments, main content section 202 displays the primary or main content that is being watched by a user. The main content may be broadcasted, received via cable or satellite feeds, pre-recorded and stored on a digital recording device (such as a PVR or DVR), streamed or downloaded via the Internet via an IP connection, stored on a home local area network (LAN), received via various types of video interconnects (e.g., Video Graphics Array (VGA), High-Definition Multimedia Interface (HDMI), component video, composite video, etc.), and so forth. Connections or inputs may also include via DVB-H and DMB-T transceiver connections, ATSC and cable television tuners, UMTS and WiMAX MBMS/MBS, IPTV through DSL or Ethernet connections, WiMax and Wifi connections, Ethernet connections, and so forth. In embodiments, the content being displayed in section 202 cannot be altered by the user. The content displayed in section 202 may include shows or programs, graphics, video games, books, video shorts, video previews, news clips, news highlights, and so forth. Related voice, audio, music, etc., may also be presented with the displayed content in section 202.

In embodiments, content displayed in pushed content section 204 may represent the pushed content source as defined in the provided action. In embodiments, content displayed in section 204 may be any content or information or graphics (e.g., audio, video or graphics signal) or text (e.g., URL link), for example. In embodiments, the content may be streamed or downloaded to connected device 108 from the Internet via an IP connection (for example, via content server 102 and network connection 104 from Figure 1), via a P2P connection (such as input 120), via broadcast/satellite/cable (such as input 122), DVB-H and DMB-T transceiver connections, ATSC and cable television tuners, UMTS and WiMAX MBMS/MBS, IPTV through DSL or Ethernet connections, WiMax and Wifi connections, Ethernet connections, and so forth. In other embodiments, the content may be content received via any USB device connection (such as from devices 114). User interface 200 may be displayed on a display device (such as display device 110). A television may be an example display device. Other examples may include, but are not limited to, a mobile Internet device (MID) that has a screen that displays video, a cell phone, a PC, laptop, or any other device that is adapted to facilitate embodiments of the invention.

In embodiments, connected device 108 allows the user to customize the display of the pushed content via content customization engine 118 and customization rules. For example, in embodiments, the main content source may be displayed in main content section 202 of the display screen, where main content section 202 includes the entire screen. The pushed content source may be displayed in pushed content section 204, where the pushed content section is overlayed in some way over the main content-section on the screen. In embodiments, pushed content section 204 may first display a link of some sort that, when activated by a user, may cause the pushed content to be downloaded and displayed by connected device 108. In other embodiments, connected device 108 may automatically download and display the pushed content in pushed content section 204. Embodiments of the invention are not limited in this context.

Embodiments of the invention allow the user to customize the display of the main and pushed content sections (e.g., placement on screen, size, volume level of audio associated with content, quality (e.g., opaque or transparent), audio only, visual only, and so forth). Embodiments of the invention are not limited in this context.

Referring again to Figure 2, user interface 200 illustrates one display format where section 204 is smaller in size than main content section 202 and positioned on the lower area of user interface 200. Embodiments of the invention are not limited to the display format illustrated in Figure 2. In fact, embodiments of the invention allow the user to customize the content displayed in section 204 and to customize the position and size of section 204 in user interface 200 via, for example, content customization engine 118 (Figure 1). Here, the user may download a program element to a connected device (such as connected device 108 from Figure 1) from an IP delivered site or service or from a USB device (for example) that allows the user to customize section 204 to reflect user preferences. The customization of section 204 may include the number of windows, the content displayed in each of its windows, the size and location of section 204 on user interface 200, and so forth. In embodiments, the user may elect to watch what is being displayed in a window of pushed content section 204. Here, the window may be expanded to include all of user interface 200.

In embodiments, the user may use connected device 108 to overlay or blend the pushed content with main content on the single display device without altering the main content. In embodiments, the main content may be decoded and then re-encoded with the pushed content. In embodiments, the overlay or blending of the pushed content and main content may be a hardware-enabled overlay or blend via a microprocessor, chipset, graphics card, etc. In other embodiments, the overlay or blending of the pushed content and main content may be a software-enabled overlay or blend via a specific application, operating system, etc. In yet other embodiments, the overlay or blending may be via a combination of hardware and/or software components. In addition, there may be some overlay or blending in the pipes themselves or via another method while the content is in route to the screen. This may be implemented with wireless connection technology, wired connection technology, or a combination of both. The user may customize or configure user interface 200 directly on connected device 108 or via a user input device 112 (Figure 1) such as a remote control or PC, for example.

Embodiments of the invention also allow for the user to define customization rules that involve triggers upon defined events. One example may include when main content section 202 starts to display a commercial then enlarge pushed content section 204 on the screen and increase the volume level for its associated audio (and decrease the volume for the main content). Once the commercials are over, then decrease pushed content section 204 to normal size and adjust the volumes accordingly. Embodiments of the invention are not limited in this context.

Referring back to Figure 1, user environment 106 may also include display device 110 and user input device 112. Display device 110 may be a monitor, projector, a conventional analog television receiver, a MID, cell phone, PC, laptop, or any other kind of device with a perceivable video display. The audio portion of the output of the connected devices may be routed through an amplifier, such as an audio/video (A/V) receiver or a sound processing engine, to headphones, speakers or any other type of sound generation device. User input device 112 may be any type of input device suited for a user to communicate with connected device 108.

Although embodiments of the invention described herein may be described as a home entertainment system, this is not meant to limit the invention. Embodiments of the invention are applicable to any connected environment including, but not necessarily limited to, an office environment, research environment, hospital or institutional environment, and so forth.

In various embodiments, system 100 may be implemented as a wireless system, a wired system, or a combination of both. When implemented as a wireless system, system 100 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 1.00 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and so forth. Examples of wired communications media may include a wire, cable, metal leads, printed circuit board (PCB), backplane, switch fabric, semiconductor material, twisted-pair wire, co-axial cable, fiber optics, and so forth.

Operations for the embodiments described herein may be further described with reference to the following figures and accompanying examples. Some of the figures may include a logic flow. Although such figures presented herein may include a particular logic flow, it can be appreciated that the logic flow merely provides an example of how the general functionality as described herein can be implemented. Further, the given logic flow does not necessarily have to be executed in the order presented unless otherwise indicated. In addition, the given logic flow may be implemented by a hardware element, a software element executed by a processor, or any combination thereof. The embodiments, however, are not limited to the elements or in the context shown or described in the figures.

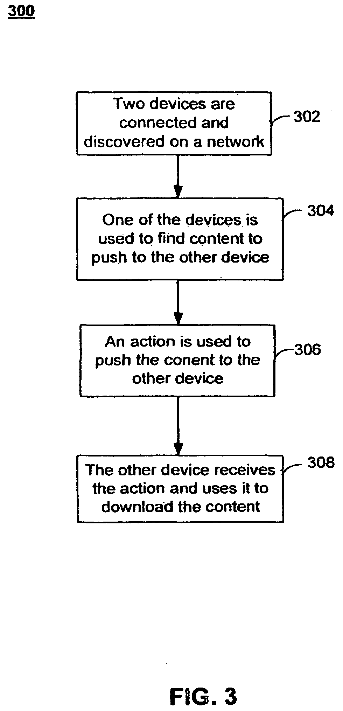

Figure 3 illustrates one embodiment of a logic flow 300. Each of the blocks in logic flow 300 was described in more detail above. As shown in logic, flow 300, at least two devices are connected and discovered on a network (such as Connected device 108 and device 114 from Figure 1) (block 302). One of the devices (e.g., device 114) is used to find content that is desirable to push to the other device (e.g., connected device 108) (block 304). An action is defined or created and used to push the content to the other device (block 306). In embodiments the action has two parameters. The first parameter indicates content that a first device (e.g., device 114) is currently viewing or has viewed. The second parameter indicates content that the other device (e.g., connected device 108) is to cause to be displayed or made available to a user. The other device receives the action and uses it to download the content to make it available for a user (block 308).

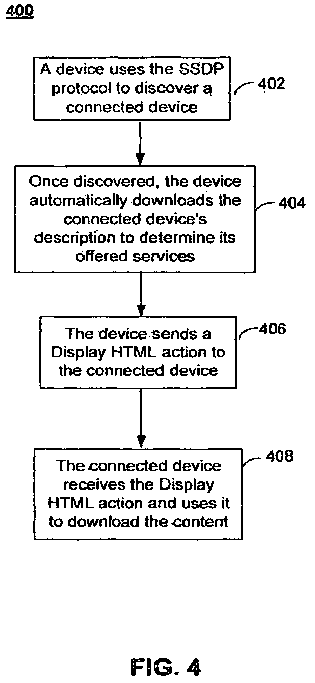

Figure 4 illustrates one embodiment of a logic flow 400. Each of the blocks in logic flow 400 was described in more detail above. As shown in logic flow 400, a device (such as device 114 from Figure 1) uses the SSDP protocol to discover a connected device (such as connected device 108 from Figure 1) (block 402). Once discovered, the device automatically downloads the connected device's description to determine its offered services (block 404). The device sends or makes available a Display HTML action to the connected device (block 406). As described above, embodiments of the Display HTML action may have two parameters. The connected device receives the Display HTML action and uses it to download the content or make the content available to a user (block 408). As described above and in embodiments, if the second parameter is left blank, then the connected device makes the content that is indicated by the first parameter available to the user.

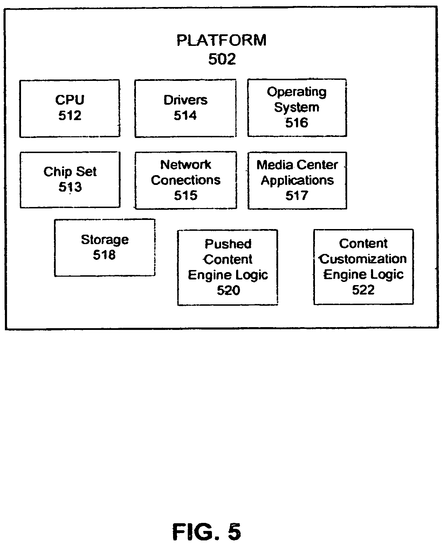

Figure 5 illustrates an embodiment of a platform 502 (e.g., connected device 108 from Figure 1). In one embodiment, platform 502 may comprise or may be implemented as a media platform 502 such as the Viiv™ media platform made by Intel® Corporation. In one embodiment, platform 502 may interact with content servers (such as servers 102 via network connection 104 from Figure 1).

In one embodiment, platform 502 may comprise a CPU 512, a chip set 513, one or more drivers 514, one or more network connections 515, an operating system 516, and/or one or more media center applications 517 comprising one or more software applications, for example. Platform 502 also may comprise storage 518, pushed content engine logic 520 and content customization engine logic 522.

In one embodiment, CPU 512 may comprise one or more processors such as dual-core processors. Examples of dual-core processors include the Pentium® D processor and the Pentium® processor Extreme Edition both made by Intel® Corporation, which may be referred to as the Intel Core Duo® processors, for example.

In one embodiment, chip set 513 may comprise any one of or all of the Intel® 945 Express Chipset family, the Intel® 955X Express Chipset, Intel® 975X Express Chipset family, plus ICH7-DH or ICH7-MDH controller hubs, which all are made by Intel® Corporation.

In one embodiment, drivers 514 may comprise the Quick Resume Technology Drivers made by Intel® to enable users to instantly turn on and off platform 502 like a television with the touch of a button after initial boot-up, when enabled, for example. In addition, chip set 513 may comprise hardware and/or software support for 5.1 surround sound audio and/or high definition 7.1 surround sound audio, for example. Drivers 514 may include a graphics driver for integrated graphics platforms. In one embodiment, the graphics driver may comprise a peripheral component interconnect (PCI) Express graphics card.

In one embodiment, network connections 515 may comprise the PRO/1000 PM or PRO/100 VE/VM network connection, both made by Intel® Corporation.

In one embodiment, operating system 516 may comprise the Windows® XP Media Center made by Microsoft® Corporation. In other embodiments, operating system 516 may comprise Linux®, as well as other types of operating systems. In one embodiment, one or more media center applications 517 may comprise a media shell to enable users to interact with a remote control device from a distance of about 10-feet away from platform 502 or a display device, for example. In one embodiment, the media shell may be referred to as a "10-feet user interface," for example. In addition, one or more media center applications 517 may comprise the Quick Resume Technology made by Intel®, which allows instant on/off functionality and may allow platform 502 to stream content to media adaptors when the platform is turned "off."

In one embodiment, storage 518 may comprise the Matrix Storage technology made by Intel® to increase the storage performance enhanced protection for valuable digital media when multiple hard drives are included. In embodiments, pushed content engine logic 520 and content customization engine logic 522 are used to enable the functionality of the invention as described herein.

Platform 510 may establish one or more logical or physical channels to communicate information. The information may include media information and control information. Media information may refer to any data representing content meant for a user. Control information may refer to any data representing commands, instructions or control words meant for an automated system. For example, control information may be used to route media information through a system, or instruct a node to process the media information in a predetermined manner. The embodiments, however, are not limited to the elements or in the context shown or described in Figure 5.

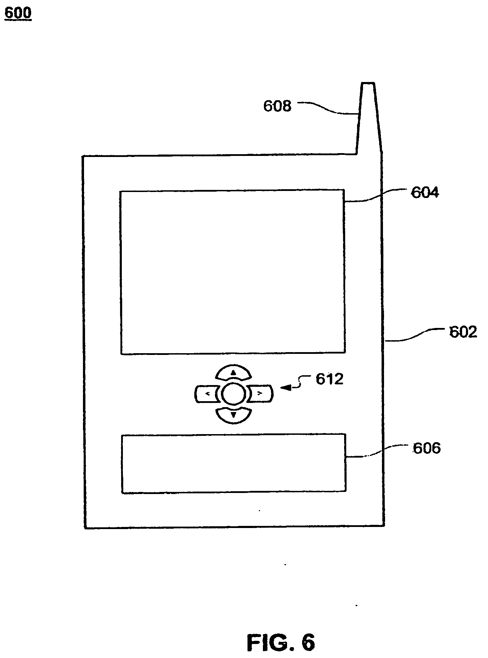

Figure 6 illustrates one embodiment of a device 600 in which functionality of the present invention as described herein may be implemented. In one embodiment, for example, device 600 may comprise a communication system. In various embodiments, device 600 may comprise a processing system, computing system, mobile computing system, mobile computing device, mobile wireless device, computer, computer platform, computer system, computer sub-system, server, workstation, terminal, personal computer (PC), laptop computer, ultra-laptop computer, portable computer, handheld computer, personal digital assistant (PDA), cellular telephone, combination cellular telephone/PDA, smart phone, pager, one-way pager, two-way pager, messaging device, blackberry™, and so forth. The embodiments are not limited in this context.

In one embodiment, device 600 may be implemented as part of a wired communication system, a wireless communication system, or a combination of both. In one embodiment, for example, device 600 may be implemented as a mobile computing device having wireless capabilities. A mobile computing device may refer to any device having a processing system and a mobile power source or supply, such as one or more batteries, for example.

Examples of a mobile computing device may include a laptop computer, ultra-laptop computer, portable computer, handheld computer, palmtop computer, personal digital assistant (PDA), cellular telephone, combination cellular telephone/PDA, smart phone, pager, one-way pager, two-way pager, messaging device, data communication device, and so forth.

In one embodiment, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

As shown in Figure 6, device 600 may comprise a housing 602, a display 604, an input/output (I/O) device 606, and an antenna 608. Device 600 also may comprise a five-way navigation button 612. I/O device 606 may comprise a suitable keyboard, a microphone, and/or a speaker, for example. Display 604 may comprise any suitable display unit for displaying information appropriate for a mobile computing device. I/O device 606 may comprise any suitable I/O device for entering information into a mobile computing device. Examples for I/O device 606 may include an alphanumeric keyboard, a numeric keypad, a touch pad, input keys, buttons, switches, rocker switches, voice recognition device and software, and so forth. Information also may be entered into device 600 by way of microphone. Such information may be digitized by a voice recognition device. Although not explicitly illustrated in Figure 6, device 600 may incorporate or have access to pushed content engine logic and content customization engine logic that may be used to enable the functionality of the invention as described herein. The embodiments, however, are not limited to the elements or in the context shown or described in Figure 6.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Some embodiments may be implemented, for example, using a machine or tangible computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The graphics and/or video processing techniques described herein may be implemented in various hardware architectures. For example, graphics and/or video functionality may be integrated within a chipset. Alternatively, a discrete graphics and/or video processor may be used. As still another embodiment, the graphics and/or video functions may be implemented by a general purpose processor, including a multicore processor. In a further embodiment, the functions may be implemented in a consumer electronics device.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method, comprising:
creating a Display HTML action, wherein the Display HTML action has a first parameter and a second parameter, the first parameter to indicate content that a first device (114) is viewing and the second parameter to indicate content that a second device (108), connected to the first device (114), is to make available to a user for display; and
making the action available to the second device (108), wherein the second device (108) is to use the Display HTML action to make the content to be displayed available to a user.

2. The method of claim 1, wherein if the second parameter in the action is blank, then the first parameter to indicate content that the second device (108) is to make available to the user for display.

3. A method, comprising:
receiving a Display HTML action at a connected device (108), wherein the Display HTML action has a first parameter and a second parameter, the first parameter to indicate content that a first device (114), connected to said connected device (108) has viewed and the second parameter to indicate pushed content that the connected device (108) is to cause to be displayed; and
using the Display HTML action to cause the display of the pushed content overlayed on main content via a user interface on a display device.

4. The method of either claim 1 or 3, wherein the content includes non-user interface content.

5. The method of claim 1 or 3, wherein the content indicated by the second parameter is one of a HTML of a web page, a subsection of a HTML of a web page and a HTML containing an embedded application on a web page.

6. The method of claim 3, wherein if the second parameter in the Display HTML action is blank, then causing the pushed content to be the content indicated by the first parameter.

7. The method of either claim 1 or 3, wherein the first device (114) is a personal computer "PC" and the connected device (108) is a connected digital television (108).

8. A machine-readable storage medium containing instructions which, when executed by a processing system, cause the processing system to perform the method of any one of claims 1 to 2 or claims 3 to 7.

9. A system, comprising:
a first device (108) connected to multiple content sources including a second device (114),
wherein the connected first device (108) is adapted to receive a Display HTML action, wherein the Display HTML action has a first parameter and a second parameter, the first parameter to indicate content that the second device (114) has viewed and the second parameter to indicate pushed content that the connected first device (108) is adapted to cause to he displayed, wherein the connected first device is adapted to use the Display HTML action to cause the display of the pushed content overlayed on main content via a user interface on a display device (110).

10. The system of claim 9, wherein the pushed content includes non-user interface content.

11. The system of claim 9, wherein the pushed content is one of a HTML of a web page, a subsection of a HTML of a web page and a HTML containing an embedded application on a web page.

12. The system of claim 9, wherein if the second parameter in the Display HTML action is blank, then causing the pushed content to be the content indicated by the first parameter.

13. The system of claim 9, wherein the second device (114) is a personal computer "PC" and the connected first device (108) is a connected digital television (108).

14. A device (108) adapted for use in the system of any one of claims 8 to 12,
wherein the device (108) is adapted to receive a Display HTML action from another device (114), wherein the Display HTML action has a first parameter and a second parameter, the first parameter to indicate content that the said another device (114) has viewed and the second parameter to indicate pushed content that the device (108) is adapted to cause to be displayed, wherein the device (108) is adapted to use the Display HTML action to cause the display of the pushed content overlayed on main content via a user interface on a display device (110).

## Patentansprüche

1. Verfahren, umfassend:
Erzeugen einer HTML-Anzeigeaktion, wobei die HTML-Anzeigeaktion einen ersten Parameter und einen zweiten Parameter aufweist, den ersten Parameter zum Angeben von Inhalt, den eine erste Vorrichtung (114) gerade betrachtet, und den zweiten Parameter zum Angeben von Inhalt, den eine mit der ersten Vorrichtung (114) verbundene zweite Vorrichtung (108) einem Benutzer zur Anzeige bereitstellen soll; und
Bereitstellen der Aktion für die zweite Vorrichtung (108), wobei die zweite Vorrichtung (108) die HTML-Anzeigeaktion dazu verwenden soll, den anzuzeigenden Inhalt einem Benutzer bereitzustellen.

2. Verfahren nach Anspruch 1, wobei, wenn der zweite Parameter in der Aktion leer ist, der erste Parameter dazu dient, Inhalt anzugeben, den die zweite Vorrichtung (108) dem Benutzer zur Anzeige bereitstellen soll.

3. Verfahren, umfassend:
Empfangen einer HTML-Anzeigeaktion auf einer angeschlossenen Vorrichtung (108), wobei die HTML-Anzeigeaktion einen ersten Parameter und einen zweiten Parameter aufweist, den ersten Parameter zum Angeben von Inhalt, den eine mit der angeschlossenen Vorrichtung (108) verbundene erste Vorrichtung (114) betrachtet hat, und den zweiten Parameter zum Angeben von Push-Inhalt, den die angeschlossene Vorrichtung (108) zur Anzeige bringen soll; und
Verwenden der HTML-Anzeigeaktion zum Bewirken der Anzeige des über einen Hauptinhalt gelegten Push-Inhalts über eine Benutzerschnittstelle auf einer Anzeigevorrichtung.

4. Verfahren nach Anspruch 1 oder 3, wobei der Inhalt externen (Non-User-Interface-)Inhalt beinhaltet.

5. Verfahren nach Anspruch 1 oder 3, wobei der vom zweiten Parameter angegebene Inhalt entweder eine HTML einer Webseite, ein Teilabschnitt einer HTML einer Webseite oder eine HTML, die eine eingebettete Anwendung auf einer Webseite enthält, ist.

6. Verfahren nach Anspruch 3, wobei, wenn der zweite Parameter in der HTML-Anzeigeaktion leer ist, bewirkt wird, dass der Push-Inhalt der vom ersten Parameter angegebene Inhalt ist.

7. Verfahren nach Anspruch 1 oder 3, wobei die erste Vorrichtung (114) ein Personalcomputer "PC" ist und die angeschlossene Vorrichtung (108) ein angeschlossenes Digitalfernsehen (108) ist.

8. Maschinenlesbares Speichermedium, das Anweisungen enthält, die, wenn von einem Verarbeitungssystem ausgeführt, bewirken, dass das Verarbeitungssystem das Verfahren nach einem der Ansprüche 1 bis 2 oder der Ansprüche 3 bis 7 durchführt.

9. System, umfassend:
eine erste Vorrichtung (108), die mit mehreren Inhaltsquellen einschließlich einer zweiten Vorrichtung (114) verbunden ist,
wobei die angeschlossene erste Vorrichtung (108) auf das Empfangen einer HTML-Anzeigeaktion ausgelegt ist, wobei die HTML-Anzeigeaktion einen ersten Parameter und einen zweiten Parameter aufweist, den ersten Parameter zum Angeben von Inhalt, den die zweite Vorrichtung (114) betrachtet hat, und den zweiten Parameter zum Angeben von Push-Inhalt, dessen Anzeige die entsprechend ausgelegte angeschlossene erste Vorrichtung (108) bewirkt, wobei die angeschlossene erste Vorrichtung darauf ausgelegt ist, die HTML-Anzeigeaktion dazu zu verwenden, die Anzeige des über einen Hauptinhalt gelegten Push-Inhalts über eine Benutzerschnittstelle auf einer Anzeigevorrichtung (110) zu bewirken.

10. System nach Anspruch 9, wobei der Push-Inhalt externen (Non-User-Interface-)Inhalt beinhaltet.

11. System nach Anspruch 9, wobei der Push-Inhalt entweder eine HTML einer Webseite, ein Teilabschnitt einer HTML einer Webseite oder eine HTML, die eine eingebettete Anwendung auf einer Webseite enthält, ist.

12. System nach Anspruch 9, wobei, wenn der zweite Parameter in der HTML-Anzeigeaktion leer ist, bewirkt wird, dass der Push-Inhalt der vom ersten Parameter angegebene Inhalt ist.

13. System nach Anspruch 9, wobei die zweite Vorrichtung (114) ein Personalcomputer "PC" ist und die angeschlossene erste Vorrichtung (108) ein angeschlossenes Digitalfernsehen (108) ist.

14. Vorrichtung (108), ausgelegt zur Verwendung im System nach einem der Ansprüche 8 bis 12,
wobei die Vorrichtung (108) auf das Empfangen einer HTML-Anzeigeaktion von einer anderen Vorrichtung (114) ausgelegt ist, wobei die HTML-Anzeigeaktion einen ersten Parameter und einen zweiten Parameter aufweist, den ersten Parameter zum Angeben von Inhalt, den die andere Vorrichtung (114) betrachtet hat, und den zweiten Parameter zum Angeben von Push-Inhalt, dessen Anzeige die entsprechend ausgelegte Vorrichtung (108) bewirkt, wobei die Vorrichtung (108) darauf ausgelegt ist, die HTML-Anzeigeaktion dazu zu verwenden, die Anzeige des über einen Hauptinhalt gelegten Push-Inhalts über eine Benutzerschnittstelle auf einer Anzeigevorrichtung (110) zu bewirken.

## Revendications

1. Procédé consistant à :
créer une action d'affichage HTML, l'action d'affichage HTML ayant un premier paramètre et un deuxième paramètre, le premier paramètre pour indiquer le contenu que visualise un premier dispositif (114) et le deuxième paramètre pour indiquer le contenu qu'un deuxième dispositif (108), connecté au premier dispositif (114), est destiné à rendre disponible pour un utilisateur à des fins d'affichage ; et
rendre l'action disponible pour le deuxième dispositif (108), le deuxième dispositif (108) étant destiné à utiliser l'action d'affichage HTML pour rendre le contenu devant être visualisé disponible pour un utilisateur.

2. Procédé selon la revendication 1, dans lequel, si le deuxième paramètre dans l'action est vide, ceci a pour conséquence que le premier paramètre va indiquer le contenu que le deuxième dispositif (108) est destiné à rendre disponible pour l'utilisateur à des fins d'affichage.

3. Procédé consistant à :
recevoir une action d'affichage HTML au niveau d'un dispositif connecté (108), l'action d'affichage HTML ayant un premier paramètre et un deuxième paramètre, le premier paramètre pour indiquer le contenu qu'un premier dispositif (114), connecté audit dispositif connecté (108), a visualisé, et le deuxième paramètre pour indiquer le contenu poussé que le dispositif connecté (108) doit faire en sorte d'afficher ; et
utiliser l'action d'affichage HTML pour provoquer l'affichage du contenu poussé recouvrant le contenu principal via une interface d'utilisateur sur un dispositif d'affichage.

4. Procédé selon l'une ou l'autre des revendications 1 et 3, dans lequel le contenu comprend un contenu non-interface utilisateur.

5. Procédé selon la revendication 1 ou 3, dans lequel le contenu indiqué par le deuxième paramètre est l'un parmi un HTML d'une page web, une sous-section d'un HTML d'une page web et un HTML contenant une application incorporée sur une page web.

6. Procédé selon la revendication 3, dans lequel, si le deuxième paramètre dans l'action d'affichage HTML est vide, ceci a pour conséquence que le contenu poussé devient le contenu indiqué par le premier paramètre.

7. Procédé selon l'une ou l'autre des revendications 1 et 3, dans lequel le premier dispositif (114) est un ordinateur personnel "PC" et le dispositif connecté (108) est une télévision numérique connectée (108).

8. Support de stockage lisible par une machine contenant des instructions qui, lorsqu'elles sont exécutées par un système de traitement, provoquent l'implémentation du procédé de l'une quelconque des revendications 1 et 2 et des revendications 3 à 7 par le système de traitement.

9. Système comprenant :
un premier dispositif (108) connecté à de multiples sources de contenu comprenant un deuxième dispositif (114),
dans lequel le premier dispositif connecté (108) est adapté pour recevoir une action d'affichage HTML, l'action d'affichage HTML ayant un premier paramètre et un deuxième paramètre, le premier paramètre pour indiquer le contenu que le deuxième dispositif (114) a visualisé et le deuxième paramètre pour indiquer le contenu poussé dont le premier dispositif connecté (108) est adapté à provoquer l'affichage, dans lequel le premier dispositif connecté est adapté pour utiliser l'action d'affichage HTML pour provoquer l'affichage du contenu poussé recouvrant le contenu principal via une interface d'utilisateur sur un dispositif d'affichage (110).

10. Système selon la revendication 9, dans lequel le contenu poussé contient un contenu non-interface utilisateur.

11. Système selon la revendication 9, dans lequel le contenu poussé est l'un parmi un HTML d'une page web, une sous-section d'un HTML d'une page web et un HTML contenant une application incorporée sur une page web.

12. Système selon la revendication 9, dans lequel, si le deuxième paramètre dans l'action d'affichage HTML est vide, ceci a pour conséquence que le contenu poussé devient le contenu indiqué par le premier paramètre.

13. Système selon la revendication 9, dans lequel le premier dispositif (114) est un ordinateur personnel "PC" et le dispositif connecté (108) est une télévision numérique connectée (108).

14. Dispositif (108) adapté pour une utilisation dans le système de l'une quelconque des revendications 8 à 12, lequel dispositif (108) est adapté pour recevoir une action d'affichage HTML depuis un autre dispositif (114), dans lequel l'action d'affichage HTML a un premier paramètre et un deuxième paramètre, le premier paramètre pour indiquer le contenu que ledit autre dispositif (114) a visualisé et le deuxième paramètre pour indiquer le contenu poussé dont le dispositif (108) est adapté à provoquer l'affichage, et dans lequel le dispositif (108) est adapté pour utiliser l'action d'affichage HTML pour provoquer l'affichage du contenu poussé recouvrant le contenu principal via une interface d'utilisateur sur un dispositif d'affichage (110).
